# EUROPÄISCHE PATENTSCHRIFT

(11) **EP 3 547 059 B1**
(45) Veröffentlichungstag und Bekanntmachung des Hinweises auf die Patenterteilung: **22.11.2023**
(21) Anmeldenummer: 18165094.6
(22) Anmeldetag: 29.03.2018
(51) Int. Cl.: G05D 1/00

(54) **VERFAHREN ZUR STEUERUNG UNBEMANNTER FAHRZEUGE**
METHOD FOR CONTROLLING UNMANNED VEHICLES
PROCÉDÉ DE COMMANDE DE VÉHICULES NON OCCUPÉ

(43) Veröffentlichungstag der Anmeldung: 02.10.2019
(73) Patentinhaber: De la Rúa Lope, Alberto, 50672 Köln (DE); Kronberger, Rainer, 50769 Köln (DE); Juliá Lopez-Barrantes, Antonio, 50674 Köln (DE)
(72) Erfinder: De la Rúa Lope, Alberto, 50672 Köln (DE); Kronberger, Rainer, 50769 Köln (DE); Juliá Lopez-Barrantes, Antonio, 50674 Köln (DE)
(74) Vertreter: Kirschner, Sebastian

(56) Entgegenhaltungen:
- EP-A1- 3 271 037
- WO-A1-2016/148784
- WO-A1-2017/123761
- US-A- 5 155 683
- US-A1- 2003 216 834
- US-A1- 2014 267 723
- US-A1- 2015 190 925
- US-A1- 2016 376 004
- ZOLLMANN STEFANIE ET AL: "FlyAR: Augmented Reality Supported Micro Aerial Vehicle Navigation", IEEE TRANSACTIONS ON VISUALIZATION AND COMPUTER GRAPHICS, IEEE SERVICE CENTER, LOS ALAMITOS, CA, US, Bd. 20, Nr. 4, 1. April 2014 (2014-04-01), Seiten 560-568, XP011543579, ISSN: 1077-2626, DOI: 10.1109/TVCG.2014.24 [gefunden am 2014-03-21]

## Beschreibung

Die Erfindung betrifft ein Verfahren zur Steuerung unbemannter Fahrzeuge mit den Merkmalen des Oberbegriffes des Patentanspruches 1

Noch bis vor einigen Jahren wurden die Messungen insbesondere vom TV-Antennensignal mit Hubschraubern durchgeführt. Anhand solcher Messungen soll festgestellt werden, ob es geografische Gebiete gibt, zu denen das Signal nicht durchdringt und ob möglicherweise Störungen in den jeweiligen Antennenmodulen bestehen. In den letzten Jahren werden für solche Messungen vermehrt Flugdrohnen eingesetzt. Diese werden im Stand der Technik meist mit konventionellen Fernsteuersystemen gesteuert. Die im Handel erhältlichen Drohnen werden dabei zumeist mit Messgeräten bestückt, um zunächst die Messung durchzuführen und anschließend die in einem Speicher aufgezeichneten Daten zu verarbeiten sowie in Form von horizontalen und vertikalen Antennendiagrammen graphisch darzustellen. Die Überarbeitung erfolgt dabei nicht in Echtzeit, sondern es erfolgt eine Nachbearbeitung, nachdem die Drohne gelandet ist und der Speicher entsprechend ausgewählt werden konnte. Die heute eingesetzten Drohnensysteme zur Durchführung von Messungen sind eher auf eine möglichst hohe Messwertqualität ausgerichtet, als auch eine intuitive Steuerung oder die kundenfreundliche Darstellung der gesammelten Daten.

Im Stand der Technik sind eine Vielzahl von ferngesteuerten, unbemannten Fahrzeugen, wie beispielsweise Flugdrohnen in Form von Quadrocoptern, aber auch ferngesteuerte Landfahrzeuge oder ferngesteuerte Wasserfahrzeuge bekannt.

Im Modellbaubereich werden derzeit Fernsteuerungen eingesetzt, die eine analoge AM- / FM-Proportionalsteuerung im Bereich 27 MHz - 40 MHz verwenden. Diese werden im Schiffs-, Flug- und Auto-Modellbau verwendet. Solche Systeme verwenden eine Proportionalsteuerung auf Basis einer Pulsbreitenmodulation (PWM) oder auch einer Pulse-Code-Modulation (PCM). Solche ferngesteuerten RC-Modelle sind günstig in der Anschaffung. Allerdings haben diese nicht die Funktionalität von den anderen im Folgenden beschriebenen deutlich kostenintensiveren Drohnensystemen.

Es sind unbemannte Fahrzeuge mit einer Kamera und mit mindestens einem Sensor zur Bestimmung der Ausrichtung und/oder der Position des unbemannten Fahrzeugs bekannt. Über eine drahtlose Verbindung werden Bilddaten der Kamera und die Daten der Sensoren an eine Bodenkontrollstation (BKS) übertragen. Die Bodenkontrollstation weist wiederum einen Computer auf, wobei die empfangenen Daten von einer auf diesem Computer ausgeführten Software verarbeitet werden.

Aus der DE 10 2016 011 512 A1 ist ein Verfahren zur Steuerung eines unbemannten Flugobjekts in Form einer Flugdrohne bekannt. Diese Flugdrohne wird zur Inspektion von Isolatoren von Freileitungen benutzt. Die Inspektion wird mit Hilfe einer sensorgestützten Drohne ausgeführt, wobei die Flugdrohne in einem geringen Abstand die zu inspizierenden Objekte optisch erfasst und mit einer Datenübertragung zwischen der Flugdrohne und einer Basisstation die Auswertung stattfindet. Die Flugdrohne weist Video- und/oder Fotokameras und/oder sowie einen oder mehrere Sensoren auf. Die Flugdrohne ist mit einer Kombination aus satellitengesteuerter und bildgesteuerter Navigation autonom bewegbar. Es besteht die Möglichkeit eines manuellen Eingriffs in die Steuerung. Die Sensoren dienen zur Prüfung des Isolators und können im elektromagnetischen, akustischen oder multispektralen optischen Bereich messen. Die Steuerung solcher Flugdrohnen ist noch nicht optimal.

Es ist ferner bekannt, auf einem Display einer Bodenkontrollstation (BKS) eine Mixed-Reality-Darstellung anzuzeigen, wobei die Mixed-Reality-Darstellung durch Überlagerung des von der Kamera aufgenommenen Bildes mit virtuellen Objekten gebildet wird.

Aus der US 9,335,764 B2 ist ein komplexes Verfahren zur Steuerung von Drohnen bekannt. Es werden hierbei mehrere Drohnen gesteuert. Die Drohnen kommunizieren über eine Funkverbindung mit einer Bodenkontrollstation. Dieses Kontrollsystem kommuniziert wiederum mit sogenannten Virtuell-Augmented-Reality-Cockpits (VARC) über eine weitere drahtlose Verbindung. Jede Drohne zeichnet dabei die Geschwindigkeit, die Beschleunigung und die Ausrichtung der Drohne auf. Die Drohnenpiloten bzw. Drohnencopiloten nutzen das VARC-System zur Steuerung der Drohnen, wobei die Drohne beispielsweise mittels eines Joysticks gesteuert wird. Das VARC-System kann in einer Ausgestaltung eine VR-Brille und einen Joystick umfassen. Das Steuerungssystem empfängt von den Drohnen die Bilddaten und fügt eine Augmented-Reality-Elemente-Darstellung hinzu, die dem Drohnenpiloten angezeigt werden. Die Darstellung kann beispielsweise 3D-Kartendarstellungen umfassen. Die Funkverbindung zwischen der Drohne und dem Steuerungssystem kann als Satellitenverbindung oder als WLAN-Verbindung ausgestaltet sein. Dieses Verfahren ist aufwendig, da es sowohl ein Kontrollsystem als auch ein VARC benötigt und diese separaten Einheiten über eine weitere Funkverbindung in Verbindung stehen müssen.

Aus der US 2016/0054733 A1 ist ein Verfahren zur Steuerung eines unbemannten Fahrzeugs bekannt. Ein Steuerungsmittel einer Bodenkontrollstation weist dabei einen Bildschirm, Eingabekomponenten und einen Prozessor auf. Das Bild wird von der Drohne aufgezeichnet und an das Steuerungsmittel übertragen. Die Drohne wird anhand des aufgezeichneten übertragenen Kamerabilds gesteuert. Die Verbindung zwischen der Bodenkontrollstation und der Drohne kann durch eine Internetverbindung gebildet sein. Die Drohne fliegt auf ihrer Mission verschiedene vorgegebene Wegpunkte ab. Die Drohne kann dabei entweder automatisch die Wegpunkte anfliegen oder manuell navigiert werden. Dem Drohnenpiloten können dabei entweder die von der Drohne aufgenommenen Bilddaten oder von einer externen, am Boden angeordneten Kamera aufgenommene Bilddaten dargestellt werden, wobei mittels der am Boden angeordneten Kamera die Flugbahn der Drohne erfasst wird. Ferner kann durch die Drohne ein Wärmebild aufgenommen werden, dass dem Drohnenpiloten ebenfalls angezeigt werden kann. Anhand der Kamerabilder kann der Pilot der Drohne mittels eines Cursors neue Wegpunkte zuweisen. Der von dem Piloten über den Cursor ausgewählte Punkt wird in eine Koordinate umgerechnet. Diese Koordinate dient als neuer Wegpunkt der Drohne.

Aus der WO 2017/131845 A1 ist bekannt, eine Drohne in Abhängigkeit von empfangenen Audiosignalen zu steuern. Die von der Drohne aufgenommenen Audiosignale werden analysiert und einem Benutzer werden auf einem Display die Audiodaten repräsentierende Informationen dargestellt. Das Display kann ein Touchscreen sein.

Aus der gattungsbildenden US 2007/023557 A1 sind unterschiedliche Möglichkeiten zur Steuerung eines unbemannten Fahrzeuges bekannt. Es ist zum einem bekannt, mittels einer an der Drohne angebrachten Kamera ein Bild aufzuzeichnen und die Drohne aufgrund der übertragenen Bilddaten zu steuern. Ferner ist beschrieben, die Drohne aufgrund einer rein virtuellen Darstellung zu steuern, was den Nachteil hat, dass die Drohne nicht gut gesteuert werden kann, wenn sich die reale Welt ändert, aber die Änderung nicht in der virtuellen Realität abgebildet worden sind. Ferner wird beschrieben, die Drohne aufgrund einer Augmented-Reality-Darstellung zu steuern, wobei das von der Kamera der Drohne aufgezeichnete Bild mit einem virtuellen Umgebungsmodell überlagert wird.

Aus der US 2003 /0216 834 A1 ist die Fernsteuerung eines unbemannten Fahrzeuges, nämlich eines mobilen Roboters mittels eines grafischen Interfaces bekannt. Der Roboter weist eine Kamera auf, wobei über eine drahtlose Verbindung Bilddaten der Kamera an eine Bodenkontrollstation übertragen werden. Der Roboter weist ferner Sensoren in Form eines Sonar-Scanners und mehreren Infrarot(IR)-Emittern und IR-Detektoren auf. Figur 12 zeigt bereits, dass ein Wegpunkt in einer Mixed-Reality-Darstellung angezeigt wird. Der Wegpunkt ist durch ein Gittermodell einer Box dargestellt. Dieser Wegpunkt ist allerdings nicht dreidimensional gerendert worden. Ferner offenbart die US 2003 /0216 834 A1 keinen Sensor zur Bestimmung der Ausrichtung der Position des Fahrzeuges.

Aus der Veröffentlichung - Zollmann Stefanieet al "FlyAR": Augmented Reality Supported Aerial Vehicle Navigation", IEEE Transactions on Visualization and Computer Graphics, IEEE Service Center, Los Alamitos, CA, US, Bd. 20, Nr 4, 1. April 2014, Seiten 560-568, XP011543579 ISSN:1077-2626, DOI:10.1109/TVCG.2014 - ist bekannt, eine Drohne zu steuern, wobei Augmented-Reality-Elemente dargestellt werden. Diese Elemente können beispielsweise dreidimensional gerenderte Wegpunkte sein. Es wird hierbei eine Mixed-Reality-Darstellung durch Überlagerung des von der Kamera der Drohne aufgenommenen Bildes mit virtuellen Objekten erzeugt.

Aus der WO2016/ 148 784 A1 ist eine Drohne bekannt, die mit einer entfernbaren Computereinrichtung in Form eines Smartphones, Tablets oder MP3-Player ausgerüstet werden kann. Das Smartphone kann dazu in einer Halterung angeordnet werden. Das Smartphone weist einen Sensor zur Bestimmung der Ausrichtung und der Position der Flugdrohne und ein Funkmodul auf. Mittels der CPU des Smartphones sind Sensordaten verarbeitbar. An der Halterung können mehrere Anschlussvorrichtungen angebracht sein. Diese Anschlussvorrichtungen können ein Spiegel oder ein Prisma aufweisen, dass dem nach unten gerichteten Kamerasensor des Smartphones ein in Flugrichtung vorausliegendes Bild spiegelt oder projiziert. Die Drohne weist ein Steuerungssystem auf, das über eine nicht näher beschriebene Schnittstelle mit dem Smartphone gekoppelt werden kann.

Der Erfindung liegt daher die Aufgabe zugrunde, das gattungsbildende Verfahren zu verbessern.

Diese der Erfindung zugrunde liegende Aufgabe wird nun durch ein Verfahren mit den Merkmalen des Patentanspruches 1 gelöst.

Als virtuelle Objekte werden dreidimensional gerenderte Wegpunkte angezeigt, wobei beim Rendern eine virtuelle Kamera verwendet wird, und wobei die Ausrichtung und die Position der virtuellen Kamera stets an die Ausrichtung und Position der realen Kamera angeglichen wird. Beim Rendern der virtuellen 3D-Objekte wird eine virtuelle Kamera in der Software der Bodenkontrollstation berechnet, wobei die Position und die Ausrichtung und somit der gewählte Bildausschnitt der realen Kamera der Drohne folgt. Hierdurch können 3D-Objekte mit der realen Videoaufnahme überlagert gerendert werden und dem Piloten als einheitliches Bild dargestellt werden. Die Größe der Darstellung der Wegpunkte ändert sich nun mit dem Abstand der Drohne bzw. des Fahrzeugs zum Wegpunkt. Hierdurch ist die Navigation für den Piloten vereinfacht. Bei Erreichen des Wegpunktes ändert sich die Farbe des Wegpunktes.

Die Drohne kann die positionierten 3D-Wegpunkte bzw. die 3D-Messpunkte zentimetergenau anfliegen. Der Flug der Drohne kann in einem Videodokument dokumentiert werden, so dass ein Nutzer bzw. Bediener sieht, dass die 3D-Messpunkte nacheinander angeflogen worden sind und dort jeweils eine Messung durchgeführt worden ist.

Die Erfindung zeichnet sich insbesondere durch den Einsatz von virtuellen Wegpunkten in Form von dreidimensionalen, virtuellen Objekten aus, die dem Piloten mit einer Mixed-Reality-Darstellung angezeigt werden. Für den Benutzer bzw. für den Piloten werden diese Wegpunkte beispielweise durch geometrische dreidimensionale Grundkörper, wie Kugeln, Quader oder dergleichen, dargestellt. Diese Wegpunkte muss der Pilot ansteuern. Der Pilot muss die Drohne bis zum dargestellten Wegpunkte steuern. Sobald der Wegpunkt erreicht ist, ändert sich die Farbe des Wegpunktes, so dass der Pilot eindeutig sieht, welche Wegpunkte bereits erreicht worden sind. Sobald die Drohne sich an der richtigen Position, nämlich an dem Wegpunkt befindet, weist die Software den Piloten darauf hin, dass die eine Messung durchgeführt werden kann, insbesondere durch die erfindungsgemäße Farbänderung des Wegpunktes. Alternativ kann auch eine erfindungsgemäße Formänderung erfolgen.

Über die Software werden dem Bediener bzw. dem Piloten die Videoaufnahmen der Drohnenkamera in Echtzeit angezeigt. Dies erfolgt entweder über den Bildschirm des verwendeten Endgerätes, beispielsweise einen PC-Monitor, einen Monitor eines Laptops oder eines Tablets oder Smartphones oder über eine Virtuell-Reality-Brille. Die von einem Datenserver der Drohne erfassten, verarbeiteten und übermittelten Daten, z.B. die Geschwindigkeit und die Höhe, werden mit dem Echtzeit-Videobild überlagert und dem Bediener bzw. dem Piloten als zusätzliche Informationen angezeigt. Ausgehend von der Position der Drohne und den Daten des digitalen Oberflächenmodells wird ein vorzugsweise gitterartiges 3D-Modell des umliegenden Geländes gerendert. Anhand der entsprechenden Satellitenbilder wird diesem 3D-Modell Textur verliehen. So entsteht ein virtuelles Modell der Umgebung der Drohne. Diese virtuelle Abbildung der Umgebung kann mit Hilfe der vom Server der Drohne erhaltenen Daten, nämlich der einer GPS-Position und Ausrichtung der Drohne, in die reale Videoaufnahme integriert werden. So entsteht eine sogenannte Mixed-Reality-Darstellung. Bei dieser Methode ist der Pilot in der Lage, sich durch Manövrieren der Drohne sowohl nach den realen Videoaufnahmen als auch nach dem generierten 3D-Modell zu richten. Außerdem lassen sich durch die Analyse der von den Sensoren der Drohne erfassten Werten sowie durch die Analyse der kartierten Umgebung virtuelle 3D-Objekte erstellen, die in das dargestellte Gelände eingefügt werden und selbst bei Bewegung und Richtungsänderung der Drohnen ihre Position im Koordinatensystem beibehalten.

Die Erfindung zugrunde liegende Software der Bodenkontrollstation ermöglicht kann von verschiedenen Computern, wie einem PC, Laptop, Tablet oder Smartphone ausgeführt werden. Diese Geräte können zudem in Verbindung mit verschiedenen Steuergeräten verwendet werden, darunter Joystick, Tastatur oder Touchpad. Als Steuerungsgerät kann ein Joystick, ein Keyboard, ein Gamepad oder ein Touchscreen verwendet werden. Die Steuerung ist somit vereinfacht worden und der Pilot kann aus mehreren Steuerungsgeräten auswählen. Als visuelle Unterstützung kann optional eine Virtuell-Reality-Brille verwendet werden.

Alternativ zu einer manuellen Steuerung besteht die Möglichkeit, die Drohne zum automatisierten Ansteuern verschiedener Wegpunkte zu programmieren.

Mittels eines Sensors der Flugdrohne werden Umgebungsdaten aufgezeichnet. Diese können in Echtzeit übermittelt werden. Als Umgebungsdaten wird eine Antennencharakteristik erfasst, wobei die Wegpunkte als Messpunkte ausgestaltet sind, wobei bei Erreichen eines der Wegpunkte eine Messung des Antennensignals vorgenommen wird.

Für die Messung von Antennensignalen kann ein virtueller Antennenmast an derselben Stelle generiert werden, an welcher der reale Mast stehen würde.

Ausgehend der vom Piloten vorgegebenen Werte werden virtuelle Wegpunkte auf verschiedenen Höhen und in verschiedenen Abständen zueinander erzeugt, die zur Messung anflogen werden müssen. Diese virtuellen Wegpunkte werden durch dreidimensionale virtuelle Objekte gebildet. Diese virtuellen Wegpunkte werden in die reale Videoaufnahme integriert und ermöglichen dem Piloten genau zu sehen, wann sich die Drohne an der richtigen Stelle für die Messung befindet.

Zu den Daten, die laufend von der Drohne übermittelt werden, gehören auch die ermittelten Strahlungswerte der Antenne. Die Übermittlung geschieht noch im Laufe des Messvorganges und ermöglicht eine dreidimensionale Darstellung des Antennendiagramms in Echtzeit. Dieses Diagramm wird mit jedem zusätzlichen ermittelten Wert vervollständigt.

Die drahtlose Verbindung ist vorzugsweise als WLAN-Verbindung ausgestaltet. Der WLAN-Standard stellt mehrere Kanäle bereit. Beispielsweise kann ein WLAN-Standard 802.11n oder 802.11ac verwendet werden, es gibt jedoch noch viel mehr Standards. Es wird insbesondere ein Kanal genutzt. Über diese Verbindung bzw. diesen einen Kanal werden zwei Server genutzt: ein Server für die Sensordaten und die Steuerbefehle und ein Server für die Videoübertragung Die Software stellt vorzugsweise mindestens eine TCP-Verbindung (TCP-Transmission Control Protocoll) zwischen den Servern und der Drohne und der Bodenkontrollstation her. Die Server befinden sich an der Drohne und können durch einen Einplatinencomputer gebildet werden. Der jeweilige Server tauscht über die TCP-Verbindung Daten mit der Bodenkontrollstation aus. Die Software steuert den Datenaustausch zwischen der Drohne und der Bodenkontrollstation. Auf der einen Seite übermittelt der Server die verarbeiteten Sensordaten der Drohne an die Bodenkontrollstation. Auf der anderen Seite werden von der Bodenkontrollstation Steuerungsbefehle an den Drohnenserver gesendet.

Über die TCP-Verbindung empfängt die Software die von den Sensoren der Drohne registrierten vom Drohnenserver verarbeiteten Daten. Dazu gehören die GPS-Position, die Geschwindigkeit, die Ausrichtung oder die zugehörigen Sensordaten, die Höhe und/oder die ermittelten Werte der Strahlungsverhältnisse.

Die Flughöhe der Flugdrohne wird mittels einer barometrischen Messung mittels eines Drucksensors bestimmt. Der Drucksensor ist an der Drohne angeordnet. Der atmosphärische Druck nimmt mit steigender Höhe ab. Daher kann ein erfasster Druck in eine Flughöhe umgerechnet werden.

Die Ausrichtung des unbemannten Fahrzeugs wird mittels eines Magnetometers und eines Beschleunigungssensors ermittelt. Das Magnetometer und der Beschleunigungssensor sind an dem Fahrzeug angebracht. Mittels des Magnetometers kann die Lage der Drohne relativ zum Erdmagnetfeld bestimmt werden. Es ist denkbar, dass das Fahrzeug ein Gyroskop zur Ermittlung der Ausrichtung aufweist. Die Ausrichtung wird vorzugsweise mittels eines Beschleunigungssensors, eines Gyroskops und eines Magnetometers ermittelt. Die Ausrichtung kann entweder mittels des Computers der Drohne oder vorzugsweise durch den Computer der Bodenkontrollstation aus den Sensordaten ermittelt werden. Die Position des Fahrzeugs wird mittels eines GPS-Sensors bestimmt. Es ist denkbar, dass die Ausrichtung anhand der GPS-Daten bestimmt wird.

Mittels der Drohne wird insbesondere eine Antennencharakteristik erfasst, wobei die Wegpunkte als Messpunkte ausgestaltet sind, wobei bei Erreichen eines der Wegpunkte eine Messung des Antennensignals vorgenommen wird. Die Werte des Strahlungsverhältnisses der Antennenanlage werden mittels eines Messempfänger bzw. mittels eines Spektrumanalysators gewonnen. Die Drohne weist insbesondere einen Spektrumsanalysator auf.

Mit diesem Verfahren wird die Messung von Antennensignalen vereinfacht, da der Pilot fortlaufend eine visuelle Referenz der gemessenen Bereiche hat. Die zu messenden Punkte sind genau bestimmt und die Software sorgt dafür, dass nur an diesen Stellen Messungen durchgeführt werden. Die Steuerung der Drohne ist sehr effektiv, so dass für die Durchführung der Messung weniger Fachkenntnisse erforderlich sind.

Dieses Messverfahren kann nicht nur auf einer Höhe, sondern entlang des Antennenmasts, d.h. auf verschiedenen Höhen angewendet werden, so dass am Ende ein 3D-Diagramm des Antennensignals entsteht.

Die von der Drohne aufgezeichneten Messwerte werden dokumentiert und graphisch dargestellt. Dadurch können eventuelle Probleme der Antenne bereits während des Flugs erkannt werden, bevor die Messung abgeschlossen worden ist. Außerdem können fehlerhafte Antennenmodule überprüft werden, ohne auf die Nachbearbeitung der Daten nach dem Flug am Boden warten zu müssen.

Ein weiterer Vorteil des Verfahrens ist, dass die Drohne selbst bei schlechten Sichtverhältnissen, beispielsweise in der Dämmerung oder bei Nacht, oder wenn das Videobild aussetzt, noch steuerbar ist. Vorzugsweise wird insbesondere bei schlechten Sichtverhältnissen ein virtuelles, gerendertes Umgebungsmodell angezeigt. Zum anderen ist die Gefahr verringert, dass der Pilot die Orientierung verliert, dadurch dass dem Piloten nicht nur die realen Videoaufnahmen zur Verfügung stehen, sondern auch eine visuelle Referenz in Form von virtuellen 3D-Objekten dargestellt werden kann.

Mittels der auf der Bodenkontrollstation verwendeten Software lassen sich mit Virtuell-Reality-Elemente ergänzte Videoaufnahmen auf beliebigen Plattformen, wie beispielsweise PC, Notebook, Tablet, MAC, Smartphone anzeigen.

Setzt sich ein Dienstleister mit dem Kunden zusammen, um die Messergebnisse zu besprechen, verfügt er mit dem vorgestellten System über Werkzeuge in Form eines 3D-Antennendiagramms, eines Flugvideos und der Flugdaten, die für den Kunden besser nachvollziehbar sind. Dadurch kann der Kunde sich mit weniger Aufwand ein Bild davon machen, wie die Messergebnisse zu bewerten sind. Mit bereitgestellten Höhen- und GPS-Werten erreicht das Verfahren eine sehr hohe Präzision. Vergleicht man das Verfahren mit der Messung von Antennensignalen mit Hilfe von Hubschraubern, so ist das hier vorgestellte Drohnenverfahren weniger kostenintensiv.

Das Verfahren kann insbesondere bei bestehenden Drohnensystemen durch ein Zusatzmodul für eine bestehendes fernsteuerbares Fahrzeug und eine zusätzliche Software für einen Computer einer Bodenkontrollstation implementiert werden. Das Zusatzmodul ermöglicht es bestehende fernsteuerbare Fahrzeuge, wie insbesondere RC-Modell oder RC-Flugdrohnen (RC-Radio Controll) mit einer verbesserten Steuerungsmöglichkeit auszurüsten. Das Zusatzmodul wird an einen Fahrzeugcontroller des unbemannten Fahrzeuges angeschlossen und ansonsten an dem unbemannten Fahrzeug befestigt. Das Zusatzmodul kann nun einen PWM- oder PCM-Wandler aufweisen, der die über die drahtlose Funkverbindung übertragenen Steuerdaten in PWM- oder PCM-Signale umwandelt, die nun an den Fahrzeugkontroller geleitet werden. Hierdurch kann eine bestehende Steuerung einer RC-Fernbedienung durch eine Steuerung mit einem Joystick, Touchpad, Keyboard oder dgl. ersetzt werden. Der Fahrzeugkontroller verarbeitet die Signale und steuert das Fahrzeug.

Das Zusatzmodul weist, um Gewicht zu sparen, vorzugsweise keine eigene Batterie auf, sondern wird an eine Batterie des unbemannten Fahrzeugs angeschlossen. Das Zusatzmodul ist mit einer Batterie des unbemannten Fahrzeuges verbindbar, um das Zusatzmodul mit Energie zu versorgen.

Das Zusatzmodul weist vorzugsweise einen Analog-Digital-Wandler auf, mittels dessen der Zustand der Batterie überwacht wird. Die Daten der Batterie können über die Funkverbindung ebenfalls an die Software der Bodenstation übertragen werden. Der Ladezustand der Batterie kann dem Piloten angezeigt werden.

Das Zusatzmodul bildet ein kompaktes und anschlussfertiges Gerät mit einer Kamera, sowie mit allen nötigen Sensoren und Komponenten zur Übertragung von Videosignalen im Flug bzw. Fahrdaten über ein einheitliches Kommunikationssignal. Dabei werden die beschriebenen Möglichkeiten zur Augmented-Reality- bzw. Mixed-Reality-Darstellung geboten. Alle Funktionen sind über die Software verwaltbar, wobei die Software auf einem Computer der Bodenkontrollstation ausgeführt wird.

Auf einem Computer einer Bodenkontrollstation ist ein Computerprogrammprodukt in Form einer Software ausführbar, wobei mittels des Computerprogrammprodukts das Verfahren durchführbar ist. Mittels des Computerprogrammprodukts werden Steuerungsdaten über die drahtlose Verbindung an das Zusatzmodul gesendet und die Daten der Kamera und die Sensordaten werden empfangen und verarbeitet, wobei aufgrund der empfangenen Sensordaten eine Position und eine Ausrichtung des unbemannten Fahrzeuges bestimmt wird, wobei aufgrund der bestimmten Ausrichtung und Position des Fahrzeugs eine virtuelle Kamera mit gleicher Ausrichtung und Position berechnet wird, um dreidimensionale Wegpunkte zu rendern und in einer Mixed-Reality-Darstellung auf einem Display der Bodenkontrollstation anzuzeigen. Die Software bzw. das Computerprogrammprodukt steuert das Display der Bodenkontrollstation.

Mittels des Zusatzmoduls und der Software kann die Übertragung von insbesondere digitalen Videosignalen durchgeführt werden. In alternativer Ausgestaltung der Erfindung können durch das Zusatzmodul analoge Videosignale übertragen werden. Die Bilddaten der Kamera werden aufgenommen und als Video- und/oder Fotomaterial gespeichert und/oder an die Bodenkontrollstation übertragen. Es werden Flugdaten gesammelt und vorzugsweise übertragen. Hierzu können die Geschwindigkeit, die Ausrichtung, die Neigung, die Höhe und die Signalstärke des Antennensignals gehören. Mittels des Zusatzmoduls kann eine Videoübertragung an die Bodenkontrollstation vorgenommen werden. Mittels des Zusatzmoduls kann über eine DuplexVerbindung die entsprechenden Daten an die Software der Bodenkontrollstation übertragen werden. Die Software der Bodenkontrollstation dient der graphischen Darstellung dieser Information sowie der Integration von Augmented-Reality-Darstellung. Mit Hilfe der Software werden gleichzeitig über die DuplexVerbindung die Steuerungssignale an die Drohne übertragen.

Die Steuerung des unbemannten Fahrzeugs, insbesondere der Drohne kann mit Hilfe eines Joysticks, eines Gamepads, eines PCs, eines Laptops, eines Smartphones oder eines Tablets erfolgen. Es ist ein GPS-Tracking des Fahrzeugs ermöglicht. Das Zusatzmodul weist insbesondere ein Barometer, ein Magnetometer, ein Gyroskop, einen Beschleunigungsmesser, ein GPS-Modul und/oder vorzugsweise einen Analog-Digital-Wandler auf. Durch den Drucksensor ist eine barometrische Druckmessung ermöglicht, wodurch die Höhenposition der Drohne erfasst werden kann. Das Zusatzmodul weist ferner einen Magnetometer und einen Beschleunigungssensor zur Ermittlung der Ausrichtung der Drohne auf. Eine GPS-Antenne dient zur Erfassung der GPS-Position der Drohne.

Durch das Zusatzmodul können der Funktionsumfang und somit auch die Anwendungsmöglichkeiten eines bestehenden unbemannten Fahrzeugs erweitert werden. Es besteht durch das Zusatzmodul eine höhere Flexibilität in der Steuerung des unbemannten Fahrzeugs dank verschiedener zur Auswahl stehender Steuerungsgeräte. Durch das Zusatzmodul werden neue Anwendungsbereiche für unbemannte Fahrzeuge dank Unterstützung von Augmented-Reality und der Möglichkeit mit 3D-Objekten zu interagieren erschlossen. Das Zusatzmodul muss lediglich angeschlossen werden und es müssen keine separaten eigenständigen Teile zugekauft werden. Es sind hierbei keine tieferen Fachkenntnisse erforderlich. Hierdurch bietet sich eine Zeitersparnis, da alle Komponenten, z.B. Sensoren und die Kamera in einem Gerät anschlussfertig zur Verfügung stehen. Hierdurch gibt es eine kostengünstige Alternative zu den ohnehin auf dem Markt angebotenen unbemannten Fahrzeugen. Das Zusatzmodul eignet sich für eine Vielzahl verschiedener Anwender, beispielsweise für Besitzer von Modellautos, Modellflugzeugen, Quadrocoptern, Multicoptern und Modellbooten. Flugschulen können mittels Augmented-Reality ergänzte Flugstrecken für Schulungen, Fahrstunden und Trainings erstellen. Es bietet sich die Möglichkeit, dass durch die Bereitstellung von 3D-Wegpunkten Rennen mit unbemannten Fahrzeugen durchgeführt werden. Die Daten der Sensoren und die Daten der Kamera werden über eine drahtlose Verbindung an die Bodenkontrollstation gesendet. Die drahtlosen Verbindungen sind insbesondere als Duplexverbindungen ausgestaltet. Zumindest eine der Verbindung ist als Duplexverbindung ausgestaltet. An der Bodenstation wird eine Software eingesetzt, die zum einem die von einem Steuergerät erfassten Steuerungsdaten über die drahtlose Verbindung an das Zusatzmodul sendet. Zum anderen werden die Sensordaten mit der Software verarbeitet, wobei die Position und die Ausrichtung der Drohne und damit die Position und Ausrichtung der Kamera bestimmt werden. In der Software wird zum Rendern der 3D-Objekte, insbesondere der dreidimensionalen Wegpunkte, eine virtuelle Kamera verwendet, wobei die Position der virtuellen Kamera stets in Position der realen Kamera anglichen wird. Die Orientierung der realen Kamera und der virtuellen Kamera sind gleich. Hierdurch ist es möglich, dass Kamerabild der Drohne mit den gerenderten 3D-Objekten zu überlagern.

Im Folgenden darf die Erfindung anhand der Zeichnung und der dazugehörigen Beschreibung näher erläutert werden. In der Zeichnung zeigt:
- Fig.1: in einer schematischen Darstellung eine Mixed-Reality-Anzeige mit virtuellen, dreidimensionalen Wegpunkten, die als Messpunkte dienen können,
- Fig. 2: zeigt in einer stark schematischen Darstellung ein Zusatzmodul und eine Software, die von einer Bodenkontrollstation betrieben wird.

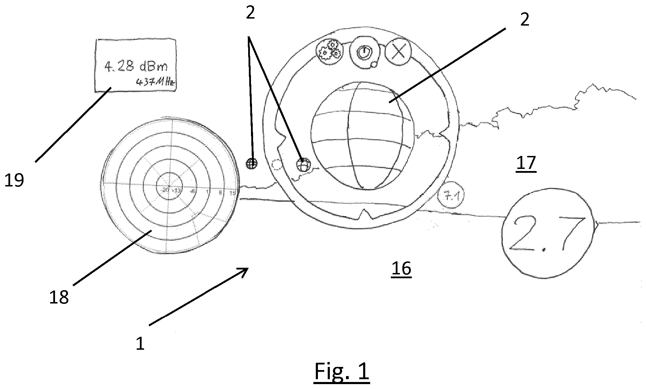

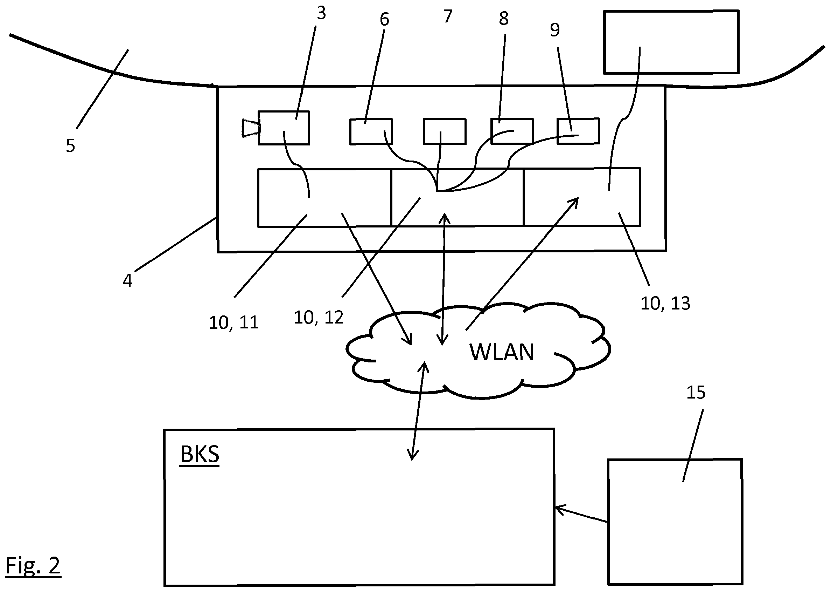

In Fig. 1 ist eine Mixed-Reality-Darstellung 1 mit virtuellen, dreidimensionalen Wegpunkten 2 zu erkennen. Die Wegpunkte 2 sind nicht von einer Kamera 3 (vgl. Fig. 2) aufgenommen worden, sondern als virtuelle 3D-Objekte gerendert worden. Die Kamera 3 liefert hier nur das Echtzeit-Bild einer Wiese und eines Waldstücks. Die Kamera 3 ist in einem Zusatzmodul 4 angeordnet, wobei das Zusatzmodul 4 an einem unbemannten Fahrzeug, insbesondere an einer unbemannten Flugdrohne 5 befestigt ist. Die eingeblendeten virtuellen Wegpunkte 2 überlagern die Bilddaten der Kamera 3 teilweise, so dass eine Mixed-Reality-Darstellung erzeugt wird. Der Pilot kann nun die Wegpunkte 2 der Reihe nach anfliegen.

Ferner wird dem Piloten in Echtzeit ein Diagramm der Antennencharakteristik dargestellt, in dem die bereits erfolgten Messwerte eingezeichnet sind. Der aktuelle Messwert 19 des Antennensignals wird ebenfalls angezeigt.

Im Folgenden darf auf Fig. 2 näher eingegangen werden:
Das Zusatzmodul 4 weist neben der Kamera 3 einen Drucksensor 6 auf. Der Drucksensor 6 dient zur barometrischen Höhenmessung, um die Flughöhe der Drohne festzustellen. Ferner sind ein Magnetometer 7 und ein Beschleunigungssensor 8 zur Bestimmung der Ausrichtung der Flugdrohne 5 vorhanden. Mittels einer GPS-Antenne 9 ist die Position des Fahrzeugs, nämlich insbesondere die Position der Flugdrohne 5 bestimmbar.

Ferner weist das Zusatzmodul 4 einen Computer 10 auf, der zum einen Videoserver 11 und einen Datenserver 12 bereitstellt. Der Videoserver 11 verarbeitet die Daten der Kamera 3. Der Datenserver 12 verarbeitet die Daten des Drucksensors 6, des Magnetometers 7 und des Beschleunigungssensors 8 und der GPS-Antenne 9. Ferner stellt der Computer 10 ein Steuerungsmodul 13 bereit, wobei über das Steuerungsmodul 13 Steuerungsbefehle empfangen und in einem Fahrzeugcontroller 14 des unbemannten Fahrzeugs, nämlich der Flugdrohne 5 weitergeleitet werden kann. Der Fahrzeugkontroller 14 ist Teil der Flugdrohne 5 und nicht Teil des Zusatzmoduls 4. Das Zusatzmodul 4 weist ferner einen Analog-Digital-Wandler (nicht dargestellt) auf, wobei mittels des Analog-Digital-Wandlers die Kapazität des Akkumulators der Flugdrohne 5 ermittelt wird.

Der Videoserver 11 und der Datenserver 11 kommunizieren über eine drahtlose WLAN-Verbindung mit der Bodenkontrollstation BKS. Es wird eine Duplexverbindung, vorzugsweise eine TCP-Verbindung zwischen der Bodenstation und dem Fahrzeug verwendet. Die Bodenkontrollstation BKS umfasst ebenfalls einen Computer auf dem eine Software ausgeführt wird. Diese Software verarbeitet die vom Zusatzmodul gesendeten Daten, nämlich insbesondere die Daten des Videoservers 11 und die Daten des Datenservers 12. Ferner werden über die Duplexverbindung die Steuerungsdaten an das Steuerungsmodul 13 und damit auch an das an den Fahrzeugcontroller 14 weitergegeben. Die Bodenkontrollstation BKS weist mindestens ein Steuergerät, beispielsweise einen Joystick, eine Tastatur, ein Gamepad oder einen Touchscreen auf. Dieses Steuergerät wird mit 15 bezeichnet.

Die Software verwendet ein dreidimensionales Koordinatensystem, in dem zum einem die Position der Drohne 5 fortlaufend aktualisiert und gespeichert ist. Ausgehend von der mittels der Software berechneten Position und Ausrichtung der Drohne werden nun die dreidimensional Objekte, insbesondere die entsprechenden Wegpunkte und/oder ein virtuelles Umgebungsmodell gerendert. Hierzu wird eine virtuelle Kamera verwendet, wobei die Ausrichtung und die Position in der virtuellen Kamera stets an die Position und die Ausrichtung der realen Kamera 3 angeglichen wird. Der Bildausschnitt der virtuellen Kamera entspricht daher dem Bildausschnitt der realen Kamera 3. Neben der Anwendung von dreidimensionalen Objekten ist es denkbar, dass in der Mixed-Reality-Darstellung 1 (vgl. Fig. 1) Messwerte oder andere Daten dargestellt werden.

### Bezugszeichenliste:

- 1: Mixed-Reality-Darstellung
- 2: virtuelle, dreidimensionale Wegpunkte
- 3: Kamera
- 4: Zusatzmodul
- 5: Flugdrohne
- 6: Drucksensor
- 7: Magnetometer
- 8: Beschleunigungssensor
- 9: GPS-Antenne
- 10: Computer
- 11: Videoserver
- 12: Datenserver
- 13: Steuerungsmodul
- 14: Fahrzeugkontroller
- 15: Steuerungsgerät
- 16: Wiese
- 17: Waldstück
- 18: Diagramm der Antennencharakteristik
- 19: aktueller Messwert des Antennensignals
- BKS: Bodenkontrollstation

## Patentansprüche

1. Verfahren zur Steuerung eines unbemannten Fahrzeugs, insbesondere einer unbemannten Flugdrohne (5), wobei das unbemannte Fahrzeug eine Kamera (3) aufweist, wobei über eine drahtlose Verbindung Bilddaten der Kamera (3) und die Daten der Sensoren (6, 7, 8, 9) an eine Bodenkontrollstation (BKS) übertragen werden, wobei auf einem Computer der Bodenkontrollstation (BKS) eine Software ausgeführt wird, wobei die empfangenen Daten von der Software verarbeitet werden, wobei auf einem Display der Bodenkontrollstation (BKS) eine Mixed-Reality-Darstellung (1) angezeigt wird, wobei die Mixed-Reality-Darstellung (1) durch Überlagerung des von der Kamera (3) aufgenommenen Bildes mit virtuellen Objekten gebildet wird, wobei als virtuelle Objekte gerenderte Wegpunkte (2) angezeigt werden, wobei beim Rendern eine virtuelle Kamera verwendet wird, wobei die Ausrichtung und die Position der virtuellen Kamera an die Ausrichtung und Position der realen Kamera (3) angeglichen wird, **dadurch gekennzeichnet, dass** das unbemannte Fahrzeug mindestens einen Sensor (6, 7, 8, 9) zur Bestimmung der Ausrichtung und der Position des unbemannten Fahrzeugs aufweist und als virtuelle Objekte dreidimensional gerenderte Wegpunkte (2) angezeigt werden, wobei die Wegpunkte (2) als Messpunkte ausgestaltet sind, wobei nach dem Erreichen des Wegpunktes (2) eine Farbänderung oder eine Formänderung des Wegpunktes (2) durchgeführt wird, wobei die Software einen Piloten darauf hinweist, dass eine Messung durchgeführt werden kann, wobei mittels der Flugdrohne (5) eine Antennencharakteristik erfasst wird, wobei bei Erreichen eines der Wegpunkte (2) eine Messung eines Antennensignals vorgenommen wird.

2. Verfahren nach Anspruch 1, **dadurch gekennzeichnet, dass** als Steuerungsgerät (15) ein Joystick, ein Keyboard, ein Gamepad oder ein Touchscreen verwendet wird.

3. Verfahren nach einem der vorstehenden Ansprüche, **dadurch gekennzeichnet, dass** die mindestens eine drahtlose Verbindung als WLAN-Verbindung ausgestaltet ist.

4. Verfahren nach einem der vorstehenden Ansprüche, **dadurch gekennzeichnet, dass** eine drahtlose TCP-Verbindung zwischen der Bodenkontrollstation (BKS) und der Drohne bereitgestellt wird, wobei über einen Server die Videodaten und über einen anderen Server die Sensordaten und/oder die Steuerungsdaten übertragen werden.

5. Verfahren nach einem der vorstehenden Ansprüche, **dadurch gekennzeichnet, dass** mittels eines Sensors der Flugdrohne (5) Umgebungsdaten aufgezeichnet werden.

6. Verfahren nach einem der vorstehenden Ansprüche, **dadurch gekennzeichnet, dass** ein virtuelles, gerendertes Umgebungsmodell angezeigt wird.

7. Verfahren nach einem der vorstehenden Ansprüche, **dadurch gekennzeichnet, dass** die Flughöhe der Flugdrohne (5) mittels einer barometrischen Messung mittels eines Drucksensors (6) bestimmt wird.

8. Verfahren nach einem der vorstehenden Ansprüche, **dadurch gekennzeichnet, dass** die Ausrichtung des unbemannten Fahrzeugs mittels eines Magnetometers (7), eines Gyroskops und eines Beschleunigungssensors (8) ermittelt wird.

9. Verfahren nach einem der vorstehenden Ansprüche, **dadurch gekennzeichnet, dass** die Position mittels eines GPS-Sensors (9) bestimmt wird.

## Claims

1. Method for controlling an unmanned vehicle, in particular an unmanned flying drone (5), wherein the unmanned vehicle has a camera (3), wherein the image data from the camera (3) and the data from the sensors (6, 7, 8, 9) is transmitted to a ground control station (BKS) via a wireless connection, wherein software is run on a computer of the ground control station (BKS), wherein the received data is processed by the software, wherein a mixed reality representation (1) is displayed on a display of the ground control station (BKS), wherein the mixed reality representation (1) is formed by superimposing virtual objects on the image recorded by the camera (3), wherein rendered waypoints (2) are displayed as virtual objects, wherein a virtual camera is used for rendering, wherein the orientation and the position of the virtual camera is matched to the orientation and position of the real camera (3), **characterized in that** the unmanned vehicle has at least one sensor (6, 7, 8, 9) for determining the orientation and the position of the unmanned vehicle and three-dimensionally rendered waypoints (2) are displayed as virtual objects, wherein the waypoints (2) are configured as measurement points, wherein a change in colour or a change in shape of the waypoint (2) is made after the waypoint (2) is reached, wherein the software indicates to a pilot that a measurement can be carried out, wherein an antenna characteristic is detected by means of the flying drone (5), wherein measurement of an antenna signal is performed when one of the waypoints (2) is reached.

2. Method according to Claim 1, **characterized in that** a joystick, a keyboard, a gamepad or a touchscreen is used as the control device (15).

3. Method according to either of the preceding claims, **characterized in that** the at least one wireless connection is configured as a WLAN connection.

4. Method according to one of the preceding claims, **characterized in that** a wireless TCP connection is provided between the ground control station (BKS) and the drone, wherein the video data is transmitted via one server and the sensor data and/or the control data is transmitted via another server.

5. Method according to one of the preceding claims, **characterized in that** environmental data is recorded by means of a sensor of the flying drone (5).

6. Method according to one of the preceding claims, **characterized in that** a virtual, rendered environmental model is displayed.

7. Method according to one of the preceding claims, **characterized in that** the flying height of the flying drone (5) is determined by means of barometric measurements using a pressure sensor (6).

8. Method according to one of the preceding claims, **characterized in that** the orientation of the unmanned vehicle is ascertained by means of a magnetometer (7), a gyroscope and an acceleration sensor (8).

9. Method according to one of the preceding claims, **characterized in that** the position is determined by means of a GPS sensor (9).

## Revendications

1. Procédé de commande d'un véhicule sans pilote, notamment d'un drone aérien sans pilote (5), le véhicule sans pilote comportant une caméra (3), les données d'image de la caméra (3) et les données des capteurs (6, 7, 8, 9) étant transmises à une station de contrôle au sol (BKS) par une liaison sans fil, un logiciel étant exécuté sur un ordinateur de la station de contrôle au sol (BKS), les données reçues étant traitées par le logiciel, une représentation en réalité mixte (1) étant affichée sur un moyen d'affichage de la station de contrôle au sol (BKS), la représentation en réalité mixte (1) étant formée par superposition de l'image, enregistrée par la caméra (3), à des objets virtuels, des points de cheminement (2) rendus sous forme d'objets virtuels étant affichés, une caméra virtuelle étant utilisée lors du rendu, l'orientation et la position de la caméra virtuelle étant adaptées à l'orientation et à la position de la caméra réelle (3), **caractérisé en ce que** le véhicule sans pilote comporte au moins un capteur (6, 7, 8, 9) destiné à déterminer l'orientation et la position du véhicule sans pilote et des points de cheminement rendus en trois dimensions (2) sont affichés sous forme d'objets virtuels, les points de cheminement (2) étant conçus comme de points de mesure, un changement de couleur ou un changement de forme du point de cheminement (2) étant effectué une fois que le point de cheminement (2) a été atteint, le logiciel alertant un pilote qu'une mesure peut être effectuée, une caractéristique d'antenne étant détectée au moyen du drone aérien (5), une mesure d'un signal d'antenne étant effectuée lorsqu'un des points de cheminement (2) est atteint.

2. Procédé selon la revendication 1, **caractérisé en ce qu'**un joystick, un clavier, une manette de jeu ou un écran tactile est utilisé comme dispositif de commande (15) .

3. Procédé selon l'une des revendications précédentes, **caractérisé en ce que** l'au moins une liaison sans fil est conçue comme une liaison WLAN.

4. Procédé selon l'une des revendications précédentes, **caractérisé en ce qu'**une liaison TCP sans fil est prévue entre la station de contrôle au sol (BKS) et le drone, les données vidéo étant transmises par le biais d'un serveur et les données de capteur et/ou les données de commande étant transmises par le biais d'un autre serveur.

5. Procédé selon l'une des revendications précédentes, **caractérisé en ce que** des données d'environnement sont enregistrées au moyen d'un capteur du drone aérien (5).

6. Procédé selon l'une des revendications précédentes, **caractérisé en ce qu'**un modèle d'environnement virtuel rendu est affiché.

7. Procédé selon l'une des revendications précédentes, **caractérisé en ce que** l'altitude de vol du drone aérien (5) est déterminée au moyen d'une mesure barométrique à l'aide d'un capteur de pression (6).

8. Procédé selon l'une des revendications précédentes, **caractérisé en ce que** l'orientation du véhicule sans pilote est déterminée au moyen d'un magnétomètre (7), d'un gyroscope et d'un capteur d'accélération (8).

9. Procédé selon l'une des revendications précédentes, **caractérisé en ce que** la position est déterminée au moyen d'un capteur GPS (9).
